# FASCICULE DE BREVET EUROPEEN

(11) **EP 2 662 875 B1**
(45) Date de publication et mention de la délivrance du brevet: **27.05.2015**
(21) Numéro de dépôt: 13305512.9
(22) Date de dépôt: 19.04.2013
(51) Int. Cl.: H01H 3/34, H01H 3/58, H02B 11/127, H02B 11/133, H01H 3/06

(54) **Dispositif de manoeuvre d'un arbre de commande d'un mécanisme appartenant à un appareil de protection électrique, et appareil de protection électrique comportant un tel dispositif**
Bedienungsvorrichtung einer Antriebswelle eines Mechanismus, der zu einem elektrischen Schutzgerät gehört, und diese Vorrichtung umfassendes elektrisches Schutzgerät
Operating device of a controlshaft of a mechanism belonging to an electric protection apparatus, and electric protection apparatus comprising one such device

(30) Priorité: 11.05.2012 FR 1201383
(43) Date de publication de la demande: 13.11.2013
(73) Titulaire: Schneider Electric Industries SAS, 92500 Rueil-Malmaison (FR)
(72) Inventeur: Toti Buttin, Frédéric, 38050 Grenoble Cedex 09 (FR); Garavelli, Jordane, 38050 Grenoble Cedex 09 (FR)
(74) Mandataire: Colette, Marie-Françoise

(56) Documents cités:
- EP-A2- 1 914 853
- EP-A2- 2 254 208
- WO-A1-86/07186
- DE-B3-102007 058 489

## Description

### DOMAINE TECHNIQUE

La présente invention concerne un dispositif de manoeuvre d'un arbre de commande d'un mécanisme appartenant à un appareil de protection électrique, ledit arbre de commande pouvant être amené successivement dans une première et une seconde position, ledit dispositif comportant une partie dite de commande apte à être reliée mécaniquement à l'arbre de commande du mécanisme de manière que cette partie de commande et cet arbre soient solidaires en rotation, et une partie dite de manoeuvre apte à entraîner en rotation ladite partie de commande et ainsi l'arbre de commande précité, dans un sens de rotation ou dans l'autre, de manière à amener cet arbre dans la première ou respectivement la seconde positions précitées.

### ETAT DE LA TECHNIQUE ANTERIEURE

L'invention concerne les cas où, dans un appareillage de protection électrique, il est utile d'augmenter le temps nécessaire pour revenir à une position de départ, après avoir manoeuvré un mécanisme.

En effet, par exemple, les dispositifs de mise à la terre ont un pouvoir de fermeture mais aucun pouvoir de coupure. Donc dans le cas de leur fermeture sous tension mettant chaque phase en court-circuit avec la terre, il sera crée un court-circuit franc. Dans ce cas, il ne faut alors pas pouvoir faire la manoeuvre inverse avant la coupure du défaut, car cela reviendrait à ouvrir avec un sectionneur un courant, ce qu'il ne sait pas faire, et qui plus est un courant de court-circuit. En conséquence, le manipulateur ne doit pas pouvoir ouvrir un sectionneur sous tension qui serait fermé en position terre avant qu'un appareil de protection n'ait coupé le courant de court-circuit qui en résulterait.

Certains appareils de protection électriques connus comportent, pour la manoeuvre de l'arbre de commande de la mise à la terre, deux orifices destinés à permettre chacun l'introduction d'un levier de manoeuvre, l'un des orifices étant destiné à l'actionnement du levier dans un sens pour amener l'arbre de commande dans une première position alors que le second orifice est destiné à l'actionnement du levier dans un sens opposé, de manière à réaliser la manoeuvre inverse et amener l'arbre de commande dans une seconde position. Le temps nécessaire pour changer le levier d'orifice constitue une temporisation permettant de retarder la manoeuvre inverse.

On connaît également des appareillages dans lesquels, pour inverser le sens de manoeuvre, le manche du levier doit d'abord effectuer librement un demi-tour par rapport au corps du levier. Ainsi, une fois la manoeuvre effectuée dans un sens, il faut d'abord effectuer le demi-tour de jeu à vide dans l'autre sens avant que le levier ne puisse entraîner la mécanique dans ce second sens. Or, pendant ce déplacement correspondant à ce demi-tour à vide, le mouvement du levier est empêché par la présence de la boîte à câbles, d'où il résulte qu'il est nécessaire d'enlever le levier et de reprendre la manoeuvre sans passer par le demi-tour de jeu, en faisant tourner la partie du levier qui entraînera l'arbre de commande d'un demi-tour.

DE-B-102007058489 décrit un dispositif de manoeuvre d'un mécanisme appartenant à un appareil de protection électrique d'après le preambule de la revendication 1.

La présente invention résout ces inconvénients et propose un dispositif de manoeuvre d'un arbre de commande d'un mécanisme appartenant à un appareil de protection électrique, de conception simple, d'encombrement réduit, et permettant de retarder la manoeuvre inverse sans qu'il soit nécessaire d'extraire le levier.

### EXPOSE DE L'INVENTION

A cet effet, la présente invention a pour objet un dispositif de manoeuvre d'un arbre de commande d'un mécanisme appartenant à un appareil de protection électrique du genre précédemment mentionné, ce dispositif étant caractérisé en ce que la première partie dite de manoeuvre précitée est manoeuvrable selon deux sens de rotation dont seul l'un est apte à entraîner en rotation dans un sens ou dans l'autre ladite seconde partie dite de commande, de manière à pouvoir choisir la position de départ de la manoeuvre d'actionnement de la partie de manoeuvre en entraînant cette dernière dans le sens de rotation selon lequel elle n'entraîne pas la partie de commande jusqu'à la position de départ souhaitée, et en ce que le dispositif comporte des moyens dits premiers pour inverser le sens de rotation de la seconde partie de manière à permettre le retour de l'arbre de commande vers sa position initiale, et des moyens de temporisation dits seconds aptes à imposer un temps de retard prédéterminé pour le retour de l'arbre de commande vers cette position initiale la première partie dite de manoeuvre et la seconde partie dite de commande sont reliées mécaniquement par l'intermédiaire d'un mécanisme à cliquet anti-retour, et les moyens d'inversion et les moyens de temporisation précités coopèrent avec le mécanisme à cliquets anti-retour, de manière que la manoeuvre d'inversion n'entraîne pas une rotation supplémentaire de la partie de manoeuvre.

Selon une caractéristique particulière, les moyens dits premiers comportent les moyens dits seconds, de manière que la valeur de ce temps de retard corresponde sensiblement au temps nécessaire pour réaliser la manoeuvre d'inversion.

Selon une réalisation préférée, les moyens d'inversion précités comportent un système à molette apte à être actionné en rotation de manière à entraîner l'inversion du sens de rotation de la seconde partie, le temps d'actionnement de la molette étant réglé de manière à correspondre sensiblement au temps de retard imposé avant le retour de l'arbre de commande vers sa position initiale.

Selon une caractéristique particulière, la molette précitée est montée dans un manchon interposé entre la première partie dite de manoeuvre et la seconde partie dite de commande.

Selon une autre réalisation, les moyens d'inversion précités comportent une bague montée autour d'un manchon interposé entre la première partie dite de manoeuvre et la seconde partie dite de commande, ladite bague étant apte à être actionnée en rotation de manière à entraîner l'inversion du sens de rotation de la seconde partie, le temps d'actionnement de la bague étant réglé de manière à correspondre au temps de retard imposé avant le retour de l'arbre de commande vers sa position initiale.

Selon une caractéristique particulière, la partie de manoeuvre comporte deux parties s'étendant sensiblement perpendiculairement l'une par rapport à l'autre, dont l'une est reliée mécaniquement à la partie de commande du levier et dont l'autre est destinée à être entraînée par l'utilisateur.

Selon une caractéristique préférée, l'arbre de commande est un arbre de mise à la terre de l'une des parties d'un circuit électrique à protéger.

La présente invention a également pour objet un appareil de protection électrique interposé entre deux parties d'un circuit électrique, ledit appareil pouvant prendre une position de mise en ligne et une position de mise à la terre de l'une des parties du circuit, ledit appareil comportant un dispositif de coupure du circuit en cas de défaut électrique et un arbre de commande de la mise à la terre, cet appareil étant **caractérisé en ce qu'il** comporte un dispositif de manoeuvre comportant les caractéristiques précédemment mentionnées prises seules ou en combinaison, ledit dispositif étant utilisé pour réaliser la manoeuvre de l'arbre de commande de la mise à la terre précité, les moyens de temporisation précités permettant d'empêcher le retour de l'arbre de commande de la mise à la terre vers une position ouverte lorsque ce dernier a été préalablement fermé sous tension, avant que le dispositif de coupure n'ait ouvert ce circuit mis en défaut de court-circuit.

Selon une caractéristique particulière, le temps de retour de l'arbre de commande vers sa position initiale est supérieur à trois secondes.

Selon une autre caractéristique, un tel dispositif de manoeuvre est utilisé pour réaliser la manoeuvre de l'arbre de mise à la terre et également la manoeuvre de l'arbre de commande permettant la mise en ligne de l'appareil.

Selon une autre caractéristique, l'arbre de commande de la mise en ligne comporte un mécanisme dit anti-retour apte à coopérer avec le mécanisme à cliquets anti-retour précité du dispositif de manoeuvre de manière à permettre l'entraînement dudit arbre de commande de la mise en ligne par pompage.

Selon une autre caractéristique, l'arbre de mise à la terre est mobile en rotation entre deux positions séparées d'un angle d'environ 90°, alors que l'arbre de mise en ligne est mobile en rotation entre deux positions séparées d'un angle d'environ 180° l'une par rapport à l'autre.

Selon une autre caractéristique, les deux positions séparées d'un angle d'environ de 90° de l'arbre de mise à la terre correspondent respectivement à deux positions d'entrée pour le levier dans l'orifice de la face de commande de l'appareil lui correspondant.

Selon une autre caractéristique, l'arbre de commande destiné à réaliser la mise en ligne est accessible à travers deux orifices d'entrée de la face de commande de l'appareil, lesdits orifices étant associés respectivement à la fermeture et à l'ouverture de l'arbre de commande précité, et en ce qu'à chaque orifice correspond deux positions d'entrée séparées d'environ 180° pour le levier du dispositif de manoeuvre de l'arbre de commande.

Avantageusement, cet appareil de protection électrique comporte un interrupteur ou un disjoncteur moyenne tension.

Selon une caractéristique particulière, cet appareil comporte un interrupteur comportant un arbre de commande destiné à la mise en ligne, ledit arbre étant accessible à travers un seul orifice d'entrée de la face de commande de l'appareil, les manoeuvres de fermeture et d'ouverture étant réalisées à travers cet orifice unique au moyen d'un dispositif selon l'une quelconque des revendications 1 à 8, actionné dans un sens ou dans l'autre afin de réaliser respectivement la fermeture et l'ouverture précitées.

Selon une autre caractéristique particulière, cet appareil est un interrupteur ou un disjoncteur moyenne tension en série avec un dispositif de mise à la terre.

### BREVE DESCRIPTION DES DESSINS

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective illustrant un dispositif de manoeuvre selon une première réalisation de l'invention,
- La figure 2 est une vue en perspective illustrant un dispositif de manoeuvre selon une seconde réalisation de l'invention,
- Les figures 3, 4, 5 et 6 sont des vues partielles en perspective, illustrant plus particulièrement la face de commande d'un appareil de protection électrique selon l'invention, équipé d'un dispositif de manoeuvre selon l'invention, les différentes figures représentant respectivement différents points de départ possibles pour la manoeuvre du dispositif,
- Les figures 7 et 8 sont des vues en perspective illustrant respectivement le levier du dispositif de manoeuvre en deux parties, et en une seule partie après le raccordement des deux parties de la partie de manoeuvre,
- Les figures 9,10 et 11 illustrent plus particulièrement la face de commande d'un appareil de protection électrique selon l'invention, équipé d'un dispositif de manoeuvre selon l'invention, le dispositif étant mis en oeuvre pour la commande d'un arbre de l'appareil de protection-commande de la ligne permettant la mise en ligne de l'appareil, les figures 9 et 10 illustrant deux positions de départ différentes pour une manoeuvre, et la figure 11 illustrant la position du levier après une manoeuvre effectuée à partir de la position de départ de la figure 10.

### EXPOSE DETAILLE D'UN MODE DE REALISATION PARTICULIER

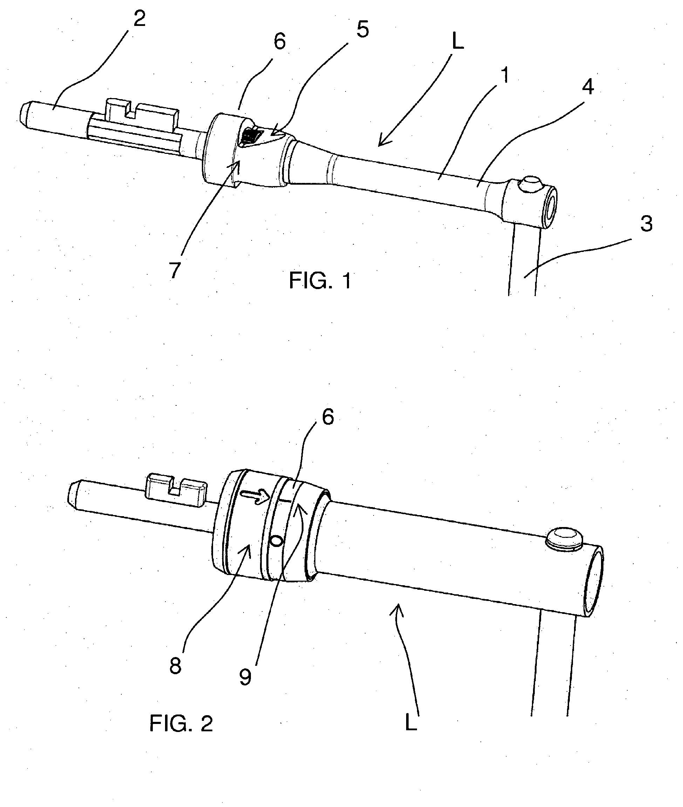

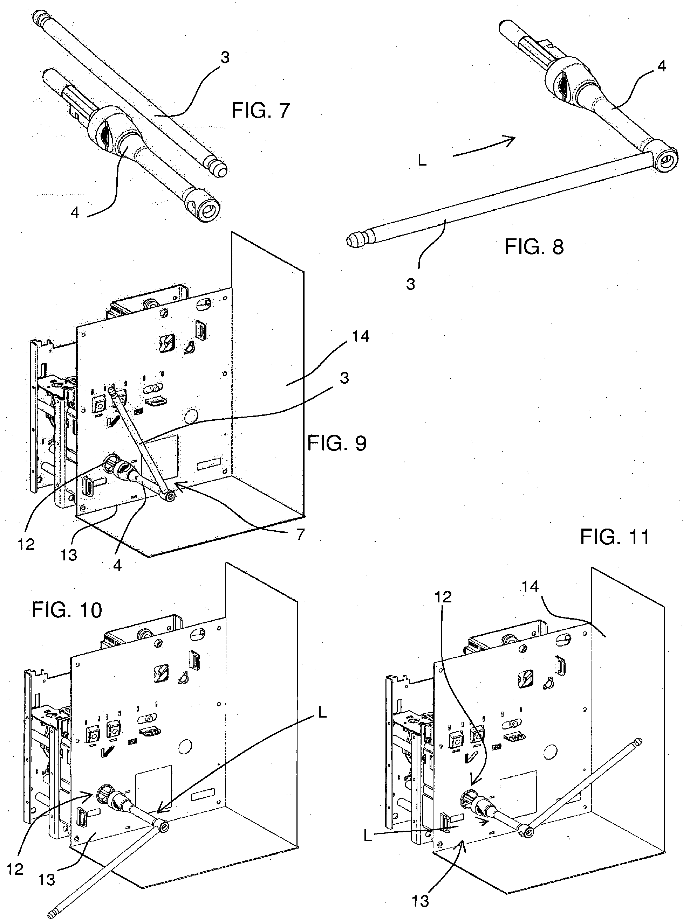

Sur les figures 1 et 2, on voit un dispositif de manoeuvre comportant un levier L constitué par une première partie dite de manoeuvre 1 et une seconde partie dite de commande 2. Cette partie de commande 2 est destinée à coopérer avec un arbre de commande de mise à la terre (non représenté) d'un appareil de protection électrique moyenne tension A, de manière à être solidaire en rotation avec cet arbre, tandis que la partie de manoeuvre 1 est constituée par deux parties 3,4 s'étendant sensiblement perpendiculairement l'une par rapport à l'autre, et est destinée à être manoeuvrée par un utilisateur, tel que ceci est illustré sur les figures 7 et 8.

Ces deux parties 1,2 sont reliées mécaniquement par une partie intermédiaire 5 comportant un manchon 6 à l'intérieur duquel est monté un système à cliquets 7 apte à transmettre le mouvement de la partie de manoeuvre 1 à la partie de commande 2 par l'intermédiaire de cliquets pouvant être anti-retour, mais pas nécessairement. Ce type de levier est bien connu sous le nom de clé à cliquets ou de levier à cliquets et fonctionne, dans les deux sens de rotation de la partie de commande, suivant le principe d'une roue libre permettant un mouvement libre dans un sens et un entraînement dans l'autre sens, un moyen d'inversion permettant d'inverser le sens de rotation. Ce système à cliquets permet également de manière bien connue de ne pas entraîner le levier, par désolidarisation dans ce sens de rotation, quand l'arbre de la commande devient moteur après le passage d'une position de point mort.

Cette partie intermédiaire 5 est conçue de telle manière que la partie de manoeuvre 1 n'entraîne la partie de commande 2 que lorsque cette partie de manoeuvre 1 est entraînée dans un seul sens de rotation dit sens de manoeuvre, l'entraînement de la partie de manoeuvre 1 dans l'autre sens n'ayant aucun effet sur la partie de commande 2. Ces deux dispositifs illustrés respectivement sur les figures 1 et 2 comportent également chacun des moyens pour inverser le sens de rotation de la seconde partie dite de commande 2 lorsque la partie de manoeuvre 1 est entraînée dans son sens de manoeuvre. Selon la première réalisation décrite sur la figure 1, ces moyens d'inversion comportent un système à molette 7 montée à l'intérieur d'un manchon 6 interposé entre les deux parties respectivement de commande et de manoeuvre. La molette est constituée de deux parties situées de manière diamétralement opposée, l'une par rapport à l'autre. Ces deux parties de molette sont légèrement dissimulées. Il n'y a pas d'indication sur le sens de rotation de la partie de commande 2 qui est déterminé par la position actuelle de la molette, d'où il résulte que l'utilisateur doit chercher, ce temps de recherche créant une temporisation pour effectuer la manoeuvre inverse. On pourra même envisager l'ajout d'un petit cache escamotable pour temporiser d'avantage, par exemple un volet à glisser pour pouvoir atteindre la molette).

Selon la réalisation illustrée sur la figure 2, ces moyens d'inversion comportent une bague 8 montée autour d'un tel manchon 6, cette bague comportant des moyens 9 indiquant deux positions correspondant respectivement à deux sens de rotation différents de l'arbre de commande.

Selon cette réalisation, la bague de manoeuvre 8 est très accessible et comporte une indication du sens de manoeuvre, d'où il résulte que la manoeuvre d'inversion est plus rapide car l'utilisateur ne cherche pas, mais cette manoeuvre pourrait être retardée par le fait par exemple d'une certaine difficulté à tourner la bague, cette difficulté créant une temporisation.

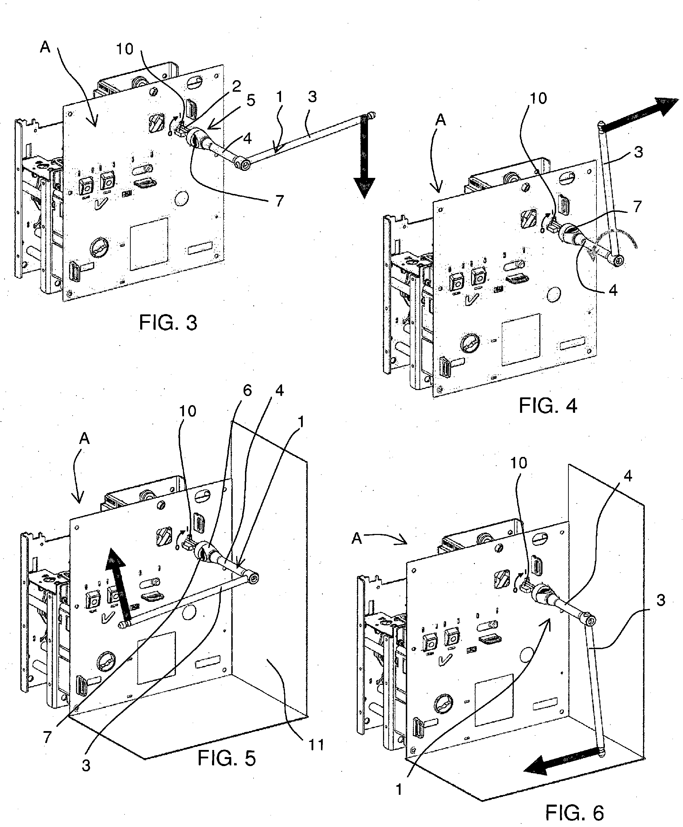

Sur les figures 3 à 6, le dispositif selon l'invention est mis en service pour réaliser la manoeuvre de l'arbre de commande de la mise à la terre d'une partie d'un circuit dans une cellule électrique moyenne tension comportant un interrupteur ou un disjoncteur moyenne tension en série avec un dispositif de mise à la terre.

Sur toutes ces figures, l'appareil est dans une position correspondant à un début de manoeuvre, comme le montre la position de la partie d'extrémité 10 de la partie d'entraînement de la partie de commande 2 du levier L.

Les figures 3 à 6 illustrent respectivement plusieurs positions angulaires possibles pour le levier au départ de la manoeuvre. Le manipulateur peut ainsi changer cette position angulaire de départ en faisant tourner le levier dans le sens inverse à son sens de manoeuvre précité, et ce en fonction des différents éléments qui se trouvent à proximité tel un mur 11 ou une boîte à câbles, et qui pourrait gêner la manoeuvre de ce levier.

Ainsi, sur la figure 3, la position initiale du levier L est à l'horizontale, la manoeuvre étant réalisée par une poussée vers le bas dans le sens des aiguilles d'une montre. Sur la figure 4, le levier a réalisé une rotation d'environ un quart de tour par rapport à la position de la figure 3, dans le sens inverse de son sens de manoeuvre, c'est-à-dire dans le sens antihoraire, et s'étend donc verticalement dans sa position initiale. La manoeuvre s'effectue dans ce cas par une traction vers le côté droit.

Sur la figure 5, le levier a encore tourné d'un quart de tour par rapport à la position de la figure 4 et s'étend donc horizontalement vers la gauche, l'effort de manoeuvre consistant à tirer le levier vers le haut.

Sur la figure 6, le levier a encore tourné d'un quart de tour dans le sens antihoraire par rapport à la position de la figure 5, et s'étend sensiblement verticalement, l'effort de manoeuvre étant cette fois réalisé par une traction vers la gauche. Cette figure 6 illustre une position dans laquelle la manoeuvre est empêchée par la présence de l'une des parois de la boîte à câbles. Cependant, le système à cliquet permet de revenir en arrière en réalisant une manoeuvre par pompage.

Sur la figure 9, le levier L est introduit par sa partie de commande 2, dans l'un 12 des orifices 12,13 associé à l'arbre de l'appareil de commande destiné à la mise en ligne de l'appareil, l'autre orifice 13 étant non utilisé. Cette position peut être une position de départ pour la manoeuvre d'actionnement. Cependant, il apparaît qu'à partir de cette position, une manoeuvre de 180° dans le sens horaire n'est pas possible, car le levier L ne pourrait pas terminer sa course en rotation à cause de la présence de la paroi latérale 14. Il est donc nécessaire de choisir une autre position de départ pour le levier en faisant tourner celui-ci dans le sens antihoraire jusqu'à par exemple la position de la figure 10. A partir de cette position, le levier peut donc être entraîné suivant un angle de 180° tel qu'illustré sur la figure 11 dans le sens horaire sans être gêné par la présence de cette paroi 14.

Il est aussi possible grâce à ce levier équipé de cliquets, de partir de la position de la figure 9 en effectuant la manoeuvre par action de pompage (c'est-à-dire un débattement angulaire « moteur » faible suivi d'un retour en position de départ), à condition que l'arbre soit lui-même équipé d'un dispositif d'anti-retour.

En fonctionnement, et en se reportant aux figures 3 à 6, lorsque le manipulateur souhaite retourner vers une position ouverte du sectionneur de mise à la terre alors qu'il vient de fermer ce dernier sous tension créant ainsi un défaut de court-circuit, il lui faut actionner les moyens d'inversion du sens de manoeuvre, c'est-à-dire la molette 7 ou bien la bague 8. Le temps de manoeuvre de ces moyens est réglé, par la conception de ces moyens, de manière à être supérieur à trois secondes, afin de laisser le temps au disjoncteur, ou autre dispositif de coupure, d'ouvrir le circuit en défaut.

Ainsi, en cas de fermeture sur court-circuit qui pourrait durer au maximum trois secondes avant d'être coupé, afin de pouvoir couvrir tous les cas de protection possibles des réseaux de distribution électrique HT, il n'est pas possible de faire la manoeuvre inverse instantanément ou dans la foulée.

Grâce à l'invention, il n'est pas nécessaire d'enlever le levier de l'orifice afin d'effectuer la manoeuvre inverse comme ceci est le cas dans l'art antérieur.

En se reportant aux figures 9 à 11, le levier L est introduit dans l'un 12,13 des orifices selon que l'utilisateur veut réaliser une ouverture ou une fermeture, et l'amplitude du mouvement de la manoeuvre peut être réduite par le fait qu'il est possible d'effectuer un pompage grâce aux cliquets du levier coopérant avec un dispositif anti-retour intégré à l'arbre de commande de mise en ligne.

On a donc réalisé grâce à l'invention un dispositif de manoeuvre dans lequel la manoeuvre d'inversion peut être plus ou moins aisée pour allonger, plus ou moins, le temps de retour à la position initiale d'un mécanisme.

Par exemple, dans un appareil de protection électrique équipé d'un sectionneur de mise à la terre, après le passage de ce dernier de la position ligne à la position terre, afin de retarder le retour en position ligne.

Parmi d'autres avantages, du fait de l'utilisation d'un entraînement du type à cliquets, les mains de l'utilisateur ne sont pas entraînées par la mécanique lorsque cette dernière termine sa manoeuvre à sa propre vitesse.

En outre, l'utilisateur peut orienter le levier comme il le souhaite afin de manoeuvrer l'appareil, à partir par exemple d'une position horizontale ou verticale, de manière que la manoeuvre soit réalisée soit en poussant le levier soit en le tirant.

En outre, l'amplitude de la manoeuvre peut être considérablement diminuée par la possibilité de manoeuvrer par pompage.

Ainsi, grâce à ce système de levier à cliquets, une temporisation de la manoeuvre inverse est obtenue aisément avec le principe du cliquet qui nécessite une action sur la molette ou autre artifice inversant le cliquet.

Ainsi, pour ce qui concerne l'entraînement de l'arbre de mise à la terre, une fonction anti-retour avant trois secondes peut être obtenue aisément avec le principe du cliquet. Ce cliquet permet aussi de ne pas entraîner le levier quand l'arbre de commande devient moteur après un passage de point mort, ceci permettant d'éviter d'utiliser sur l'arbre une rampe de type hélicoïdal par exemple, ou un système dit « de dent de loup » qui permet d'extraire ou de désaccoupler le levier.

Enfin, il donne une meilleure ergonomie de la manoeuvre à l'opérateur en découplant la partie de commande de la zone de préhension, laquelle peut prendre n'importe quelle position angulaire, une certaine latitude angulaire étant ainsi offerte à l'opérateur gaucher ou droitier.

Il est important de noter que la position du cliquet sur le levier n'est pas anodine. Celui-ci est situé au plus près de l'entrée de commande afin d'éviter que le manipulateur ne puisse tenir aisément cette partie introduite dans la commande, sauf pour ce qui concerne le cas du pompage avec interface en dents de loup. Concernant l'utilisation du dispositif selon l'invention pour la commande de l'arbre de mise en ligne, compte-tenu du débattement angulaire important de l'arbre, l'association d'un levier à cliquets et d'un dispositif anti-retour prévu sur l'arbre permet de solutionner les cas ou le débattement angulaire de l'arbre est supérieur au débattement angulaire disponible.

Cela permet donc d'effectuer avec ce levier un pompage avec un débattement angulaire limité. Sans cela, il serait nécessaire de placer un système à cliquets sur chaque arbre de commande en complément du cliquet anti-retour existant.

Ainsi, le fait d'avoir intégré ce système à cliquets du côté du levier permet d'économiser une multiplication de cette fonction sur les différents arbres de commande concernés.

Bien entendu, l'invention n'est pas limitée aux modes de réalisation décrits et illustrés qui n'ont été donnés qu'à titre d'exemple.

C'est ainsi que d'autres moyens pourraient être envisagés pour retarder la manoeuvre d'inversion tels que prévoir un cache pour accéder à la molette, escamoter un moyen de blocage ou rendre nécessaire l'utilisation des deux mains pour réaliser la manoeuvre inverse.

## Revendications

1. Dispositif de manoeuvre d'un arbre de commande d'un mécanisme appartenant à un appareil de protection électrique, ledit arbre de commande pouvant être amené successivement dans une première et une seconde position, ledit dispositif comportant une partie dite de commande apte à être reliée mécaniquement à l'arbre de commande du mécanisme de manière que cette partie de commande et cet arbre soient solidaires en rotation, et une partie dite de manoeuvre apte à entraîner en rotation ladite partie de commande et ainsi l'arbre de commande précité, dans un sens de rotation ou dans l'autre, de manière à amener cet arbre dans la première ou respectivement la seconde position précitées, la première partie dite de manoeuvre précitée (1) étant manoeuvrable selon deux sens de rotation dont seul l'un est apte à entraîner en rotation dans un sens ou dans l'autre la seconde partie dite de commande (2), de manière à pouvoir choisir la position de départ de la manoeuvre d'actionnement de la partie de manoeuvre (1) en entraînant cette dernière dans le sens de rotation selon lequel elle n'entraîne pas la partie de commande (2) jusqu'à la position de départ souhaitée, et en ce que le dispositif comporte des moyens dits premiers pour inverser le sens de rotation de la seconde partie (2) de manière à permettre le retour de l'arbre de commande vers sa position initiale, et des moyens de temporisation dits seconds aptes à imposer un temps de retard prédéterminé pour le retour de l'arbre de commande vers cette position initiale, **caractérisé en ce que** la première partie dite de manoeuvre (1) et la seconde partie dite de commande (2) sont reliées mécaniquement par l'intermédiaire d'un mécanisme à cliquet anti-retour, et **en ce que** les moyens dits premiers d'inversion (7,8) et les moyens de temporisation dits seconds coopèrent avec le mécanisme à cliquets anti-retour, de manière que la manoeuvre d'inversion n'entraîne pas une rotation supplémentaire de la partie de manoeuvre.

2. Dispositif de manoeuvre selon la revendication 1, **caractérisé en ce que** les moyens dits premiers comportent les moyens dits seconds, de manière que la valeur de ce temps de retard corresponde sensiblement au temps nécessaire pour réaliser la manoeuvre d'inversion.

3. Dispositif de manoeuvre selon la revendication 1 ou 2, **caractérisé en ce que** les moyens d'inversion précités comportent un système à molette (7) apte à être actionné en rotation de manière à entraîner l'inversion du sens de rotation de la seconde partie (2), le temps d'actionnement de la molette étant réglé de manière à correspondre sensiblement au temps de retard imposé avant le retour de l'arbre de commande vers sa position initiale.

4. Dispositif de manoeuvre selon la revendication 3, **caractérisé en ce que** la molette précitée (7) est montée dans un manchon (6) interposé entre la première partie dite de manoeuvre (1) et la seconde partie dite de commande (2).

5. Dispositif de manoeuvre selon la revendication 1 ou 2, **caractérisé en ce que** les moyens d'inversion précités comportent une bague (8) montée autour d'un manchon (6) interposé entre la première partie dite de manoeuvre (1) et la seconde partie dite de commande (2), ladite bague (8) étant apte à être actionnée en rotation de manière à entraîner l'inversion du sens de rotation de la seconde partie, le temps d'actionnement de la bague (8) étant réglé de manière à correspondre au temps de retard imposé avant le retour de l'arbre de commande vers sa position initiale.

6. Dispositif de manoeuvre selon l'une quelconque des revendications 1 à 5, **caractérisé en ce que** la partie de manoeuvre (1) comporte deux parties (3,4) s'étendant sensiblement perpendiculairement l'une par rapport à l'autre, dont l'une (4) est reliée mécaniquement à la partie de commande (2) du levier, et dont l'autre (3) est destinée à être entraînée par l'utilisateur.

7. Dispositif de manoeuvre selon l'une quelconque des revendications 1 à 6, **caractérisé en ce qu'il** est utilisé pour réaliser la commande d'un arbre de mise à la terre de l'une des parties d'un circuit électrique à protéger.

8. Dispositif de manoeuvre selon l'une quelconque des revendications 1 à 7, **caractérisé en ce que** les moyens de temporisation précités imposent un temps de retard pour le retour de l'arbre de commande vers sa position initiale supérieur à 3 secondes.

9. Dispositif de manoeuvre selon l'une quelconque des revendications 1 à 8, **caractérisé en ce qu'il** est utilisé pour réaliser la manoeuvre de l'arbre de mise à la terre et également la manoeuvre de l'arbre de commande permettant la mise en ligne de l'appareil.

10. Appareil de protection électrique interposé entre deux parties d'un circuit électrique, ledit appareil pouvant prendre un position de mise en ligne et une position de mise à la terre de l'une des parties du circuit, ledit appareil comportant un dispositif de coupure du circuit en cas de défaut électrique et un arbre de commande de la mise à la terre, **caractérisé en ce qu'**il comporte un dispositif de manoeuvre selon l'une quelconque des revendications précédentes utilisé pour réaliser la manoeuvre de l'arbre de commande de la mise à la terre précité, les moyens de temporisation précités permettant d'empêcher le retour de l'arbre de commande de la mise à la terre vers une position ouverte lorsque ce dernier a été préalablement fermé sous tension, avant que le dispositif de coupure n'ait ouvert ce circuit mis en défaut de court-circuit.

11. Appareil de protection électrique selon la revendication 10, **caractérisé en ce qu'il** comporte un dispositif de manoeuvre utilisé pour réaliser la manoeuvre de l'arbre de mise à la terre et également la manoeuvre de l'arbre de commande permettant la mise en ligne de l'appareil, et **en ce que** l'arbre de commande de la mise en ligne comporte un mécanisme dit anti-retour apte à coopérer avec le mécanisme à cliquets anti-retour précité du dispositif de manoeuvre de manière à permettre l'entraînement dudit arbre de commande de la mise en ligne par pompage.

12. Appareil de protection électrique selon la revendication 10 ou 11, **caractérisé en ce que** l'arbre de mise à la terre est mobile en rotation entre deux positions séparées d'un angle d'environ 90°, alors que l'arbre de mise en ligne est mobile en rotation entre deux positions séparées d'un angle d'environ 180° l'une par rapport à l'autre.

13. Appareil de protection électrique selon la revendication 12, **caractérisé en ce que** les deux positions séparées d'un angle d'environ de 90 ° de l'arbre de mise à la terre correspondent respectivement à deux positions d'entrée pour le levier dans l'orifice de la face de commande de l'appareil lui correspondant.

14. Appareil de protection électrique selon l'une quelconque des revendications 10 à 13, **caractérisé en ce que** l'arbre de l'appareil de commande destiné à réaliser la mise en ligne est accessible à travers deux orifices d'entrée (12,13) de la face de commande de l'appareil, lesdits orifices étant associés respectivement à la fermeture et à l'ouverture dudit arbre, et **en ce qu'**à chaque orifice correspond deux positions d'entrée séparées d'environ 180° pour le levier du dispositif de manoeuvre.

15. Appareil de protection électrique selon l'une quelconque des revendications 10 à 14, **caractérisé en ce que** qu'il comporte un interrupteur ou un disjoncteur moyenne tension.

16. Appareil de protection électrique selon l'une quelconque des revendications 10 à 15, **caractérisé en ce qu'il** comporte un interrupteur comportant un arbre de commande destiné à la mise en ligne, ledit arbre étant accessible à travers un seul orifice d'entrée de la face de commande de l'appareil, les manoeuvres de fermeture et d'ouverture étant réalisées à travers cet orifice unique au moyen d'un dispositif selon l'une quelconque des revendications 1 à 7, actionné dans un sens ou dans l'autre afin de réaliser respectivement la fermeture et l'ouverture précitées.

17. Appareil de protection électrique selon l'une quelconque des revendications 10 à 16, **caractérisé en ce que** c'est un interrupteur ou un disjoncteur moyenne tension en série avec un dispositif de mise à la terre.

## Patentansprüche

1. Betätigungsvorrichtung für eine Schaltwelle eines Schaltmechanismus' einer elektrischen Schutzeinrichtung, welche Schaltwelle nacheinander in eine erste und eine zweite Stellung verbracht werden kann, welche Vorrichtung einen sogenannten Schaltteil, der mechanisch mit der Schaltwelle des Schaltmechanismus' gekoppelt werden kann, um so eine drehfeste Verbindung zwischen dem genannten Schaltteil und der genannten Welle herzustellen, sowie einen sogenannten Betätigungsteil umfasst, der dazu dient, den genannten Schaltteil und dadurch die genannte Schaltwelle in der einen oder der anderen Drehrichtung drehwirksam mitzuführen, um so die Welle in die genannte erste oder die genannte zweite Stellung zu verbringen, wobei der genannte erste, sogenannte Betätigungsteil (1) in zwei Drehrichtungen betätigt werden kann, von denen nur eine dazu geeignet ist, den zweiten, sogenannten Schaltteil (2) in der einen oder anderen Drehrichtung drehwirksam mitzuführen, so dass die Ausgangsstellung des Betätigungsteils (1) frei gewählt werden kann, indem der genannte Betätigungsteil bis zum Erreichen der Betätigungs-Ausgangsstellung in der Drehrichtung betätigt wird, in der er den Schaltteil (2) nicht mitführt, wobei die Vorrichtung sogenannte erste Mittel zur Drehrichtungsumkehr des zweiten Teils (2), die dazu dienen, die Schaltwelle in ihre Ausgangsstellung zurückzuführen, sowie zweite, sogenannte Zeitverzögerungsmittel umfasst, die dazu dienen, zwangsweise eine bestimmte Zeitdauer vorzugeben, bevor die Schaltwelle in die genannte Ausgangsstellung zurückgeführt werden kann, **dadurch gekennzeichnet, dass** der erste, sogenannte Betätigungsteil (1) und der zweite, sogenannte Schaltteil (2) über einen Klinkenmechanismus mit Rücklaufsperre mechanisch miteinander verbunden sind, und dass die ersten, sogenannten Umkehrmittel (7, 8) und die zweiten, sogenannten Zeitverzögerungsmittel mit dem Klinkenmechanismus mit Rücklaufsperre zusammenwirken, derart, dass die Betätigung der Drehrichtungsumkehr keine weitere Drehung des Betätigungsteils bewirkt.

2. Betätigungsvorrichtung nach Anspruch 1, **dadurch gekennzeichnet, dass** die sogenannten ersten Mittel die sogenannten zweiten Mittel umfassen, derart, dass die Dauer der Zeitverzögerung annähernd der zur Betätigung der Drehrichtungsumkehr erforderlichen Zeit entspricht.

3. Betätigungsvorrichtung nach Anspruch 1 oder 2, **dadurch gekennzeichnet, dass** die genannten Umkehrmittel eine Rändelschraube (7) umfassen, die dazu dient, durch Verdrehen die Drehrichtungsumkehr des zweiten Teils (2) zu bewirken, wobei die Zeit zur Betätigung der Rändelschraube so ausgelegt ist, dass sie annähernd der zwangsweise vorgegebenen Zeitverzögerung vor einer möglichen Rückkehr der Schaltwelle in ihre Ausgangsstellung entspricht.

4. Betätigungsvorrichtung nach Anspruch 3, **dadurch gekennzeichnet, dass** die genannte Rändelschraube (7) in eine zwischen dem ersten, sogenannten Betätigungsteil (1) und dem zweiten sogenannten Schaltteil (2) angeordnete Hülse (6) eingesetzt ist.

5. Betätigungsvorrichtung nach Anspruch 1 oder 2, **dadurch gekennzeichnet, dass** die genannten Umkehrmittel einen Ring (8) umfassen, der auf einer zwischen dem ersten, sogenannten Betätigungsteil (1) und dem zweiten sogenannten Schaltteil (2) angeordneten Hülse (6) montiert ist und verdreht werden kann, um die Drehrichtungsumkehr des zweiten Teils zu bewirken, wobei die Zeit zur Betätigung des Rings (8) so ausgelegt ist, dass sie der zwangsweise vorgegebenen Zeitverzögerung vor einer möglichen Rückkehr der Schaltwelle in ihre Ausgangsstellung entspricht.

6. Betätigungsvorrichtung nach irgendeinem der Ansprüche 1 bis 5, **dadurch gekennzeichnet, dass** der Betätigungsteil (1) zwei, annähernd senkrecht zueinander angeordnete Abschnitte (3, 4) umfasst, von denen einer (4) mechanisch mit dem Schaltteil (2) des Hebels verbunden ist und der andere (3) dazu dient, vom Bediener betätigt zu werden.

7. Betätigungsvorrichtung nach irgendeinem der Ansprüche 1 bis 6, **dadurch gekennzeichnet, dass** sie verwendet wird, um eine Schaltwelle in die Erdungsstellung zu verbringen und so die Erdung eines der Abschnitte eines zu schützenden Leitungsnetzes zu bewirken.

8. Betätigungsvorrichtung nach irgendeinem der Ansprüche 1 bis 7, **dadurch gekennzeichnet, dass** die genannten Zeitverzögerungsmittel zwangsweise eine Zeitdauer von mehr als 3 Sekunden vorgeben, bevor die Schaltwelle in ihre Ausgangsstellung zurückkehren kann.

9. Betätigungsvorrichtung nach irgendeinem der Ansprüche 1 bis 8, **dadurch gekennzeichnet, dass** sie verwendet wird, um sowohl die Schaltwelle zur Überführung in die Erdungsstellung als auch die Schaltwelle zur Überführung in die Leitungsstellung der Schutzeinrichtung zu betätigen.

10. Elektrische Schutzeinrichtung, die zwischen zwei Abschnitte eines elektrischen Leitungsnetzes geschaltet ist und in eine Leitungsstellung sowie in eine Erdungsstellung eines der Netzabschnitte verbracht werden kann, welche Schutzeinrichtung eine Einrichtung zur Abschaltung des Leitungsnetzes bei Auftreten eines elektrischen Fehlers sowie eine Erdungs-Schaltwelle umfasst, **dadurch gekennzeichnet, dass** die Schutzeinrichtung eine Betätigungsvorrichtung nach irgendeinem der vorhergehenden Ansprüche umfasst, die dazu verwendet wird, die genannte Schaltwelle in die Erdungsstellung zu verbringen, wobei die genannten Zeitverzögerungsmittel dazu ausgelegt sind, zu verhindern, dass die Erdungs-Schaltwelle nach einer von ihr ausgeführten Einschalthandlung unter Spannung in eine Trennstellung zurückkehrt, wenn nicht zuvor der kurzschlussbehaftete Leitungsabschnitt durch die Abschalteinrichtung abgeschaltet wurde.

11. Elektrische Schutzeinrichtung nach Anspruch 10, **dadurch gekennzeichnet, dass** sie eine Betätigungsvorrichtung umfasst, die dazu verwendet wird, sowohl die Schaltwelle zur Überführung in die Erdungsstellung als auch die Schaltwelle zur Überführung in die Leitungsstellung der Schutzeinrichtung zu betätigen, und dass die Schaltwelle zur Überführung in die Leitungsstellung eine sogenannte Rücklaufsperre umfasst, die dazu dient, mit dem genannten Klinkenmechanismus mit Rücklaufsperre der Betätigungsvorrichtung so zusammenzuwirken, dass eine Betätigung der genannten Schaltwelle zur Überführung in die Leitungsstellung durch eine Pumpbewegung ermöglicht wird.

12. Elektrische Schutzeinrichtung nach Anspruch 10 oder 11, **dadurch gekennzeichnet, dass** die Erdungs-Schaltwelle zwischen zwei um 90° zueinander versetzte Stellungen verschwenkt werden kann, während die Leitungs-Schaltwelle zwischen zwei um 180° zueinander verset zte Stellungen verschwenkt werden kann.

13. Elektrische Schutzeinrichtung nach Anspruch 12, **dadurch gekennzeichnet, dass** die beiden um 90 ° zueinander versetzten Stell ungen der Erdungs-Schaltwelle zwei verschiedenen Einsteckpositionen des Hebels in die zugehörige steuerseitige Öffnung der Schutzeinrichtung entsprechen.

14. Elektrische Schutzeinrichtung nach irgendeinem der Ansprüche 10 bis 13, **dadurch gekennzeichnet, dass** die Schaltwelle zur Überführung in die Leitungsstellung der Schutzeinrichtung durch zwei an der Steuerseite der Schutzeinrichtung ausgebildete Einstecköffnungen (12, 13) zugänglich ist, welche Öffnungen jeweils einer Einschalt- und einer Ausschaltbewegung der genannten Schaltwelle zugeordnet sind, und dass jeder Einstecköffnung zwei um etwa 180° zueinander versetzte Stellungen des Hebels der Betätigungsvorrichtung zugeordnet sind.

15. Elektrische Schutzeinrichtung nach irgendeinem der Ansprüche 10 bis 14, **dadurch gekennzeichnet, dass** sie einen Mittelspannungs-Lastschalter oder -Leistungsschalter umfasst.

16. Elektrische Schutzeinrichtung nach irgendeinem der Ansprüche 10 bis 15, **dadurch gekennzeichnet, dass** sie einen Lastschalter mit einer Schaltwelle zur Überführung in die Leitungsstellung umfasst, welche Schaltwelle durch eine einzige steuerseitige Einstecköffnung der Schutzeinrichtung hindurch zugänglich ist, wobei die Einschalt- und Ausschaltbewegungen mithilfe einer Betätigungsvorrichtung nach irgendeinem der Ansprüche 1 bis 7 durch diese einzige Einstecköffnung hindurch gesteuert werden und die Betätigungsvorrichtung in der einen oder in der anderen Richtung betätigt wird, um jeweils die genannte Einschalt- oder Ausschaltbewegung auszuführen.

17. Elektrische Schutzeinrichtung nach irgendeinem der Ansprüche 10 bis 16, **dadurch gekennzeichnet, dass** sie als Reihenschaltung aus einem Mittelspannungs-Lastschalter oder -Leistungsschalter und einer Erdungseinrichtung ausgebildet ist.

## Claims

1. Device for manoeuvring a control shaft of a mechanism belonging to an electrical protection apparatus, said control shaft being able to be brought successively into a first and a second position, said device comprising a so-called control part suitable for being linked mechanically to the control shaft of the mechanism so that this control part and this shaft are secured together in rotation, and a so-called manoeuvring part suitable for rotationally driving said control part and thus the abovementioned control shaft, in one direction of rotation or in the other, so as to bring this shaft into the abovementioned first or respectively second position, the abovementioned so-called manoeuvring first part (1) being able to be manoeuvred in two directions of rotation, only one of which is suitable for rotationally driving the so-called control second part (2) in one direction or in the other, so as to be able to choose the starting position of the actuating manoeuvre of the manoeuvring part (1) by driving the latter in the direction of rotation in which it does not drive the control part (2) to the desired starting position, and in that the device comprises so-called first means for reversing the direction of rotation of the second part (2) so as to make it possible to return the control shaft to its initial position, and so-called second time delay means suitable for imposing a predetermined delay time for the return of the control shaft to this initial position, **characterized in that** the so-called manoeuvring first part (1) and the so-called control second part (2) are linked mechanically via a non-return ratchet mechanism, and **in that** the so-called reversing first means (7, 8) and the so-called second time delay means cooperate with the non-return ratchet mechanism, so that the reversal manoeuvre does not result in an additional rotation of the manoeuvring part.

2. Manoeuvring device according to Claim 1, **characterized in that** the so-called first means comprise so-called second means, so that the value of this delay time substantially corresponds to the time needed to perform the reversal manoeuvre.

3. Manoeuvring device according to Claim 1 or 2, **characterized in that** the abovementioned reversal means comprise a thumbwheel system (7) suitable for being rotationally actuated so as to result in the reversal of the direction of rotation of the second part (2), the actuation time of the thumbwheel being set so as to substantially correspond to the delay time imposed before the return of the control shaft to its initial position.

4. Manoeuvring device according to Claim 3, **characterized in that** the abovementioned thumbwheel (7) is mounted in a sleeve (6) inserted between the so-called manoeuvring first part (1) and the so-called control second part (2).

5. Manoeuvring device according to Claim 1 or 2, **characterized in that** the abovementioned reversal means comprise a ring (8) mounted around a sleeve (6) inserted between the so-called manoeuvring first part (1) and the so-called control second part (2), said ring (8) being suitable for being rotationally actuated so as to result in the reversal of the direction of rotation of the second part, the actuation time of the ring (8) being set so as to correspond to the delay time imposed before the return of the control shaft to its initial position.

6. Manoeuvring device according to any one of Claims 1 to 5, **characterized in that** the manoeuvring part (1) comprises two parts (3, 4) extending substantially at right angles to one another, one (4) of which is linked mechanically to the control part (2) of the lever, and the other (3) of which is intended to be driven by the user.

7. Manoeuvring device according to any one of Claims 1 to 6, **characterized in that** it is used to produce the control of an earthing shaft of one of the parts of an electrical circuit to be protected.

8. Manoeuvring device according to any one of Claims 1 to 7, **characterized in that** the abovementioned time delay means impose a delay time for the return of the control shaft to its initial position that is greater than 3 seconds.

9. Manoeuvring device according to any one of Claims 1 to 8, **characterized in that** it is used to perform the manoeuvring of the earthing shaft and also the manoeuvring of the control shaft making it possible to connect the apparatus in line.

10. Electrical protection apparatus inserted between two parts of an electrical circuit, said apparatus being able to assume a position of in-line connection and a position of earthing of one of the parts of the circuit, said apparatus comprising a device for breaking the circuit in the event of an electrical fault and an earthing control shaft, **characterized in that** it comprises a manoeuvring device according to any one of the preceding claims used to perform the manoeuvring of the abovementioned earthing control shaft, the abovementioned time delay means making it possible to prevent the return of the earthing control shaft to an open position when the latter has been previously closed under power, before the breaking device has opened this circuit with the short-circuit fault.

11. Electrical protection apparatus according to Claim 10, **characterized in that** it comprises a manoeuvring device used to perform the manoeuvring of the earthing shaft and also the manoeuvring of the control shaft making it possible to connect the apparatus in line, and **in that** the in-line connection control shaft comprises a so-called non-return mechanism suitable for cooperating with the abovementioned non-return ratchet mechanism of the manoeuvring device so as to make it possible to drive said in-line connection control shaft by pumping.

12. Electrical protection apparatus according to Claim 10 or 11, **characterized in that** the earthing shaft is rotationally mobile between two positions separated by an angle of approximately 90°, whereas the in-line con nection shaft is rotationally mobile between two positions separated by an angle of approximately 180° from one another.

13. Electrical protection apparatus according to Claim 12, **characterized in that** the two positions separated by an angle of approximately 90° of the earthing shaft correspond respectively to two input positions for the lever in the orifice of the control face of the apparatus corresponding to it.

14. Electrical protection apparatus according to any one of Claims 10 to 13, **characterized in that** the shaft of the control apparatus intended to produce the in-line connection is accessible through two input orifices (12, 13) of the control face of the apparatus, said orifices being associated respectively with the closing and the opening of said shaft, and **in that** each orifice has two corresponding input positions separated by approximately 180° for the lever of th e manoeuvring device.

15. Electrical protection apparatus according to any one of Claims 10 to 14, **characterized in that** it comprises a medium voltage switch or circuit breaker.

16. Electrical protection apparatus according to any one of Claims 10 to 15, **characterized in that** it comprises a switch comprising a control shaft intended for in-line connection, said shaft being accessible through a single input orifice of the control face of the apparatus, the opening and closing manoeuvres being performed through this single orifice by means of a device according to any one of Claims 1 to 7, actuated in one direction or in the other in order to respectively perform the abovementioned closing and opening.

17. Electrical protection apparatus according to any one of Claims 10 to 16, **characterized in that** it is a medium voltage switch or circuit breaker in series with an earthing device.
